# EUROPEAN PATENT SPECIFICATION

(11) **EP 0 444 826 B1**
(45) Date of publication and mention of the grant of the patent: **02.10.1996**
(21) Application number: 91301408.0
(22) Date of filing: 21.02.1991
(51) Int. Cl.: H02H 7/122, H02H 9/02, H02H 5/04

(54) **Protection circuit for a semiconductor device**
Schutzschaltung für eine Halbleiteranordnung
Circuit de protection pour un dispositif semi-conducteur

(30) Priority: 26.02.1990 JP 45016/90
(43) Date of publication of application: 04.09.1991
(73) Proprietor: FUJI ELECTRIC CO. LTD., Kawasaki 210 (JP)
(72) Inventor: Shigekane, Hisao, Matsumoto-shi (JP)
(74) Representative: Carmichael, David Andrew Halliday

(56) References cited:
- EP-A- 0 010 980
- EP-A- 0 352 987
- FR-A- 2 252 682
- GB-A- 2 221 806

## Description

The present invention relates to a semiconductor device comprising an overcurrent protection circuit for a semiconductor device for an inverter, and more particularly to a protection circuit whose composition may be simplified and whose number of circuit components may be reduced.

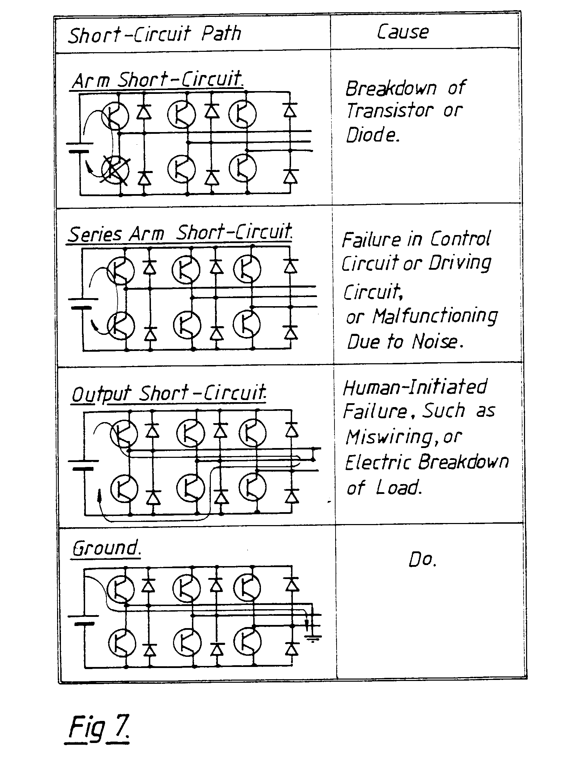

EP-A-0 352 987 discloses a device wherein the current of power switches is monitored by comparing the temperature of a sensor monitoring the current with an ambient temperature sensor signal (TIME-CURRENT signal in Figure 7). An additional temperature protection is provided (to detect over heating of the chip) and logically combined with the overcurrent signal in an OR-circuit (OVER-TEMP in Figure 7).

In the following, like reference numerals and characters are used to designate corresponding parts in the accompanying drawings, in which:
Figure 1 is a schematic circuit diagram of one embodiment of the present invention;
Figure 2 is a waveform for explaining the operation of the circuit in Figure 1;
Figure 3 is a detailed diagram of a base driving circuit with overcurrent protecting function;
Figure 4 is a detailed diagram of a circuit in which the circuit in Figure 3 is provided with an alarm circuit;
Figure 5 is a schematic diagram of a base driving circuit with overcurrent protecting function;
Figure 6 is a diagram showing an example of Over Load Safety Operation Area of a power transistor;
Figure 7 is an illustration of various types of short-circuit faults of an inverter;
Figure 8 is a diagram showing an example of a conventional three phase bridge inverter circuit composition; and
Figure 9 is a diagram showing an example of a composition of a conventional base driving circuit for a power transistor.

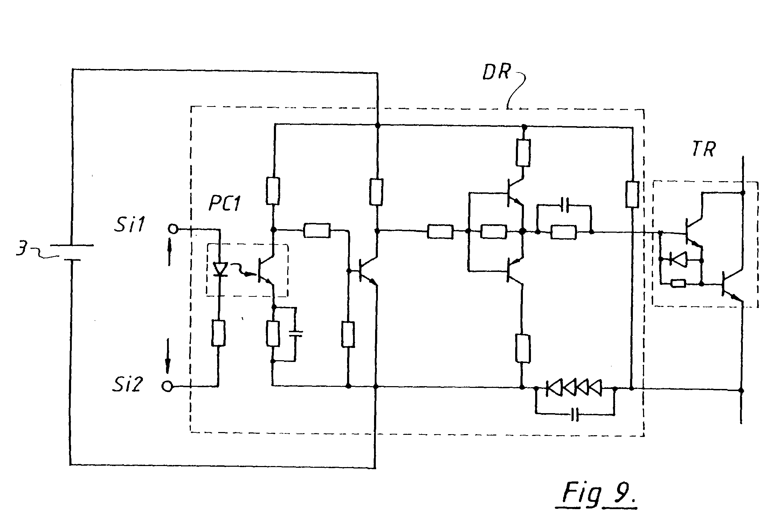

Referring first to Figure 9, there is shown in detail the base driving circuit for a power transistor used as a power switching device similar to that described in the present applicant's US Patent US-A-4 949 213.

US-A-4 949 213 describes a common drive output circuit for driving dissimilar switching semiconductor devices having different drive input characteristics by turning on and off dc power supplies to apply a voltage between the drive input terminals of either one of the switching semiconductor devices through two transistors connected in a Darlington pair, the collector circuit of one of the two transistors which is not at the output stage having a diode inserted in series which has such a polarity as to permit passage of the collector current.

In Figure 9, TR indicates a pair of NPN power transistors in Darlington connection, DR indicates a base drive circuit, and the numeral 3 designates a power supply of this base driving circuit (a driving power supply). The reference characters Si1 and Si2 refer to input terminals of a driving signal S which turns on and off the power transistor TR. In this circuit, the power transistor TR turns on when a photo-coupler PC1 turns on, and similarly the power transistor TR turns off when the photo-coupler PC1 turns off.

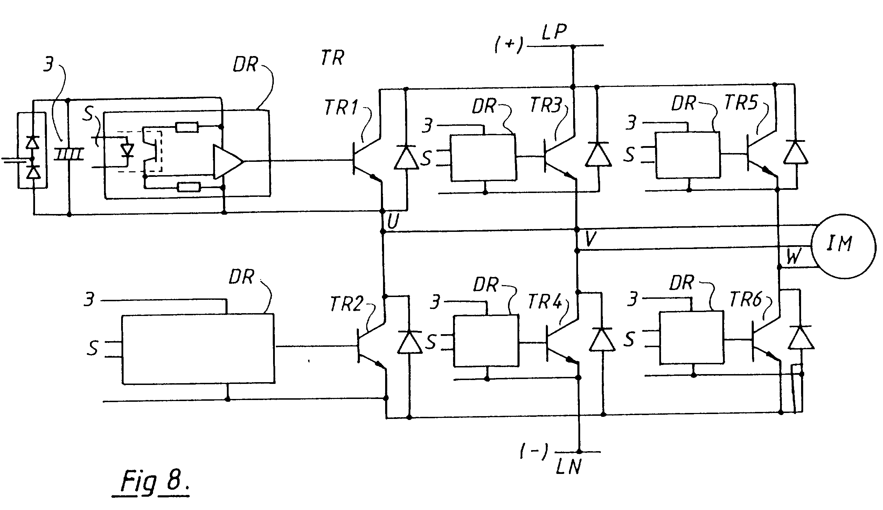

Figure 8 shows an example of an inverter circuit which comprises the base driving circuits as shown in Figure 9 and the power transistors.

In Figure 8, TR1 to TR6 are NPN power transistors which are connected in bridge to form a three phase inverter, and IM denotes an induction motor. In this circuit, DC electric power applied between a positive line (+) LP and a negative line (-) LN of main DC electrodes is converted into three-phase AC electric power. The three phases, U, V, W, are supplied to the induction motor IM from each connection point (a midpoint) between the upper and lower arms of the bridge.

When the base driving circuit DR as shown in Figure 9 is used in the inverter as shown in Figure 8, it requires three insulated driving power supplies 3 each corresponding to a respective one of the transistors TR1, TR3 and TR5, because they are in the upper arms and the negative electrodes of these driving power supplies 3 are each coupled to different output lines of the three phase which differ in electrical potential from each other.

Compared with this, only one driving power supply 3 may be required for the transistors TR2, TR4 and TR6 in the lower arms because the negative electrodes of these driving power supplies 3 are all coupled to the negative line (-) LN of the main circuit DC power supply, and are thus at the same electrical potential. That is, the driving power supplies 3 in an inverter circuit in three phase bridge connection may consist of at least four power supplies, three for the upper arms and one for the lower arms.

In the inverter circuit as shown in Figure 8, short-circuit faults may occur such as an arm short-circuit, a series arm short-circuit, an output short-circuit or a ground. These are illustrated schematically in Figure 7.

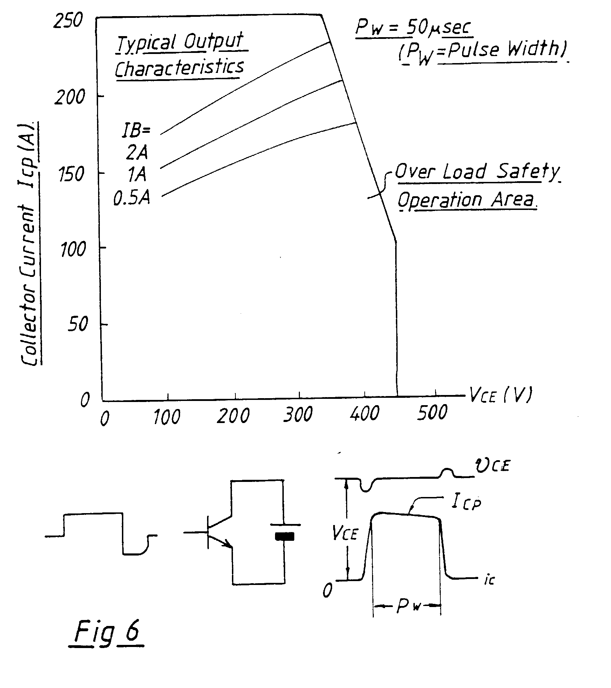

When these faults occur, an overcurrent flows through the power transistor TR. However, the power transistor has a Over Load Safe Operation Area (OLSOA) in its collector current I_{CP} versus collector-emitter voltage V_{CE} characteristic diagram as shown in Figure 6 and will not fail until the locus of I_{CP} deviates from the OLSOA. Then, at a short-circuit fault the power transistors must be instantly brought into turn-off mode by detecting overcurrent by means of the circuit as shown in Figure 5.

Figure 5 shows a schematic diagram of the base driving circuit with a function of overcurrent protection. In this diagram, the part enclosed by a broken line is an overcurrent protection circuit OC.

The function of the power transistor protection in Figure 5 is as follows:
1. A driving signal S being applied to the terminals Si for turning on the power transistor charges a capacitor C1 through a resistor R1, and simultaneously turns on the power transistor TR through the resistor R2.
2. The normally operated power transistor TR has a much lower saturated collector-emitter voltage V_{CE}(sat) than the avalanche voltage of a zener diode ZD. Then, the capacitor C1 discharges its charge to the collector C of the power transistor TR through a diode D2.
3. At a short circuit fault an excessive current that starts to flow in the power transistor TR raises V_{CE}(sat) of TR to be higher than the avalanche voltage of the zener diode ZD. This prevents the capacitor C1 from discharging its charge to the power transistor TR.
4. As a result, the terminal voltage of the capacitor C1 is raised to be higher than the avalanche voltage of the zener diode ZD. This turns on an auxiliary transistor Q2 and lowers the base-emitter voltage of the power transistor TR to the saturated collector-emitter voltage V_{CE}(sat) which turns off power transistor TR.

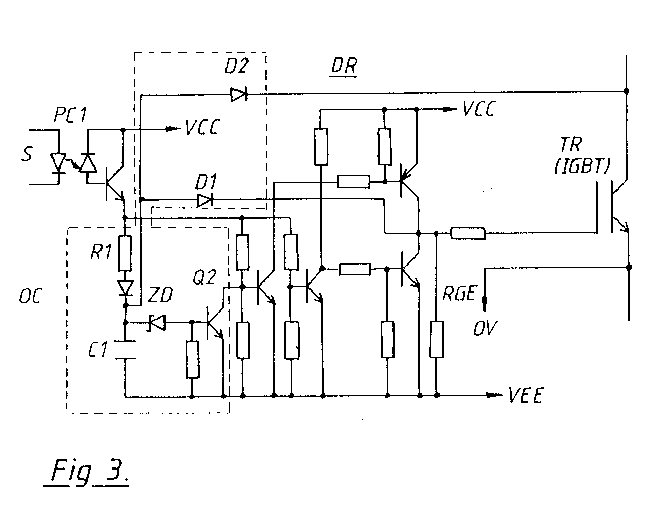

Figure 3 shows a particular example of a circuit composition of the base driving (in this case, gate driving) circuit with overcurrent protecting function using an IGBT as a power switching device which is equivalent to the power transistor TR in Figure 5. In Figure 3 the part enclosed with a broken line is also an overcurrent protection circuit OC, and the other part is a base driving circuit DR. The basic function of the circuit in Figure 3 is the same as that in Figure 5, but the driving signal S is given through a photo-coupler PC1 as is the case in Figure 9, and the base driving circuit DR is more complex.

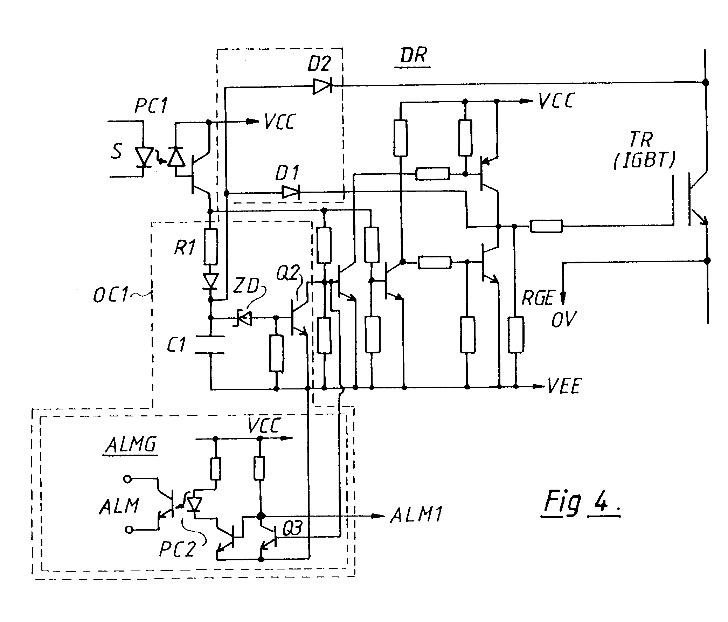

The circuit as shown in Figure 3, however, lacks any means for providing an output on the functioning of the overcurrent protection circuit OC to the outside of the circuit. Then the circuit is usually provided with an alarm circuit ALMG, which is shown in Figure 4 as a part enclosed by a broken line. The overcurrent protection circuit in Figure 4, which is provided with an alarm circuit, is called an overcurrent protection circuit with alarm circuit OC1, for convenience.

In an ordinary inverter circuit, an alarm signal ALM is applied to a driving signal generating circuit for cutting the driving signal S, which further turns off simultaneously six power device elements in a three phase inverter circuit to protect these power switching devices even if an overcurrent flows through only one of the chips of these power device elements.

The overcurrent protection circuit described above has the problems now to be enumerated. When the driving circuit with alarm circuit in Figure 4 is used in a three phase inverter circuit such as is seen in Figure 8, the lines for alarm signals ALM for each power transistor must be insulated from each other for being collected together in order to supply the signals to an apparatus (a microcomputer, for example) which controls the driving signals for the six transistor elements, because the electrical potentials of the driving power supplies 3 are different from each other for each of transistors TR1, TR3 and TR5 in the upper three arms and for all of transistors TR2, TR4 and TR6 in the lower three arms. Consequently, at least four photo-couplers in total, indicated as PC2 in Figure 4, are needed to provide an alarm function in the inverter circuit. This causes complexity of the circuit with the need for an increased number of components.

The present invention aims to solve the above problems and to provide a simplified protection circuit for a semiconductor device that permits the use of electronic components capable only of withstanding low voltages, thus reducing cost.

According to the present invention, there is provided a semiconductor device, comprising a protection circuit, wherein said semiconductor device comprises power switching device chips each of which has a first and second main electrode and a control electrode for turning on and off a circuit between said first and second main electrodes, hereinafter referred to as a main circuit, in response to a control signal applied between said second main electrode and said control electrode, the first main electrode of one and the second main electrode of the other of respective pairs of said power switching device chips being connected together at midpoints to form series circuits in which said main circuits of two chips are connected in series with the same polarity, a number of said series circuits being contained in one package and being connected in parallel with the same polarity, and
outputting an AC voltage supply from said midpoints between respective pairs of series-connected power switching device chips by applying a DC voltage between those main terminals of said switching device chips of each series connected pair which are not connected to said midpoints, and switching the power switching device chips on and off by applying driving signal pulses to their control electrodes
said protection circuit further comprising:
means, associated with each of the power switching device chips whose second main electrodes are connected to the midpoints, to detect overcurrents flowing in the associated power switching device chips and operative to render the respective power switching device chips non-conductive until the start of the next driving signal pulse applied to their respective control electrodes, the arrangement being such that successive periods of overcurrent flow cause the power switching device chip to heat up, temperature sensors being provided for detecting the temperature of each or a plurality of the power switching device chips whose second main electrodes are connected to said midpoints, the number of said temperature sensors (H) being equal to or less than the total number of such power switching device chips,
means for generating a first alarm signal when the temperature detected by any of said temperature sensors exceeds a predetermined value, said means being coupled to a terminal point, hereinafter referred to as a point of reference potential, for said second main electrodes of said power switching device chip in each said series circuit, and the protection circuit comprising
means for providing a second alarm signal by determining that the current of any of said main circuits in said power switching device chips whose second electrodes are connected to said point of reference potential, or a summed current of a plurality of said main circuits in these power switching device chips, exceeds a predetermined value, and
means which receives the first and second alarm signals and emits a third alarm signal when one or more of said first and second alarm signals is detected.

Overheating due to an overcurrent state is detected for power switching devices being at least in the upper arms of a bridged inverter circuit in Figure 8 by means of temperature sensors such as thermistors disposed in proximity to these devices through transmission lines electrically insulated from the devices.

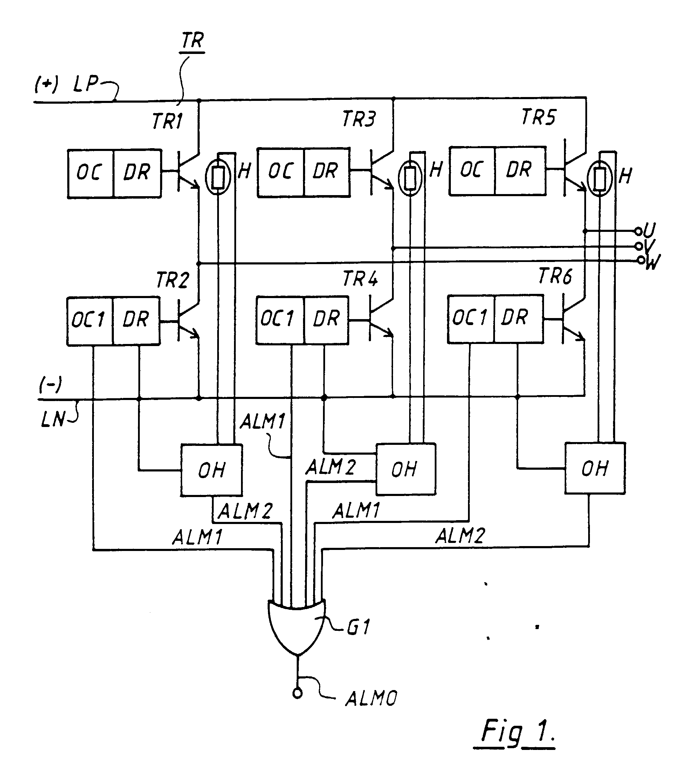

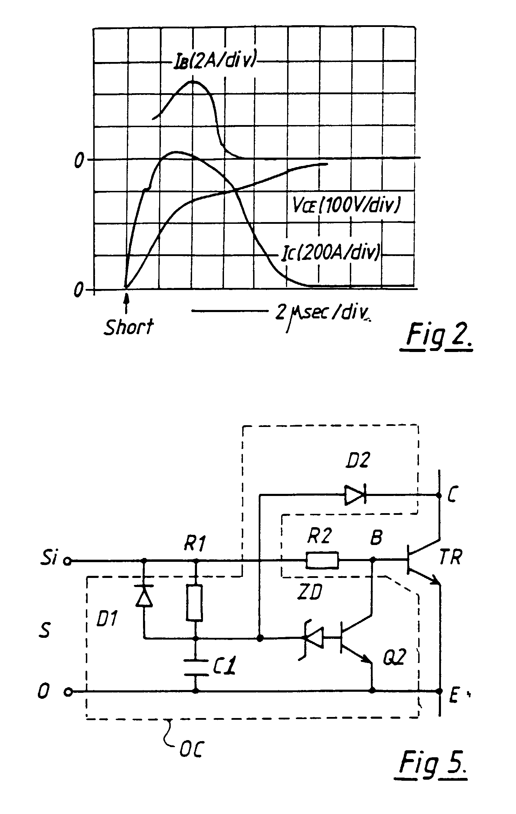

The preferred embodiment of the present invention is explained with reference to Figures 1 to 4. Figure 1 shows a schematic circuit as an example of the embodiments of the present invention. Figure 2 shows respective waveforms of a base current I_{B}, a collector current I_{C} and a collector-emitter voltage V_{CE} of the power transistor during the overcurrent protection by the circuits in Figure 3 to Figure 5.

In Figure 1, respective power transistors TR1 to TR6, which constitute an inverter circuit in a three phase bridge connection, are in this case power transistor chips, and these six chips are to be contained in one package. The overcurrent protection circuits OC for the power transistors TR1, TR3 and TR5 in the upper arms of the bridge, and a base driving circuit DR are the same as those in Figure 3 which do not emit alarm signals. On the other hand, the overcurrent protection circuits for the power transistors TR2, TR4 and TR6 in the lower arms of the bridge are those which emit alarm signals ALM1, and the overcurrent protection circuit with alarm circuit OC1 seen in Figure 4 may be used for them without any modification. This alarm signal ALM1, however, may be taken out directly from the alarm circuit without being relayed through a photo-coupler PC2, for example, from the collector of a transistor Q3 in the previous stage, because each emitter of these three power transistors TR2, TR4 and TR6 is coupled together to the negative line (-) LN of a main DC power supply which is on a point of reference potential. Then, in the present invention, the alarm photo-coupler PC2 may be eliminated from the overcurrent protection circuit with alarm circuit OC1 in Figure 4. These three alarm signals ALM1 are lead to the OR circuit G1. In the lower arms, the base driving circuits DR for the power transistors TR2, TR4 and TR6 are the same as those shown in Figure 3 or Figure 4.

Temperature sensors H such as thermistors are disposed in proximity to the chips or elements of the power transistors TR1, TR3 and TR5. Each temperature sensor H is coupled to the OR circuit G1 through a respective overheat protection circuit OH, whose negative line is coupled to the negative line (-) LN of the main DC power supply on the point of reference potential.

When an overcurrent flows through any one of the power transistors TR1, TR3 and TR5 in the upper arms, its collector current I_{C} and emitter voltage V_{CE} vary as shown in Figure 2 to cause the transistor element to become overheated. At the same time, the corresponding overcurrent protection circuit OC functions to turn off the driving signal which has been directly applied to the transistor, and this condition is latched as an OFF mode since the auxiliary transistor Q2 in OC is kept turned on by continuous discharging of the capacitor C1. The latching of the overcurrent protection circuit OC is then released when the pulsed driving signal S, which is given as an input signal to the base driving circuit DR of the transistor element, becomes OFF mode, since the capacitor C1 is not charged through the resistor R1 but discharges its charge through Q2 to reduce the terminal voltage below the avalanche voltage of the zener diode ZD to turn off Q2.

Consequently, when the driving signal S becomes ON mode again to allow the overcurrent to flow, I_{C} and V_{CE} of the power transistor element have the same waveforms in Figure 2 again to reheat the power transistor element.

By repeating such ON and OFF modes, those of the elements TR1, TR3 and TR5 through which the overcurrent flows are overheated, and when the temperature of an overheated element exceeds a predetermined value, the overheat protection circuit OH functions to give an alarm signal ALM2 to the OR circuit G1. Thus, the alarm signals due to overcurrent in any of the six power transistors TR1 to TR6 are given to the OR circuit G1. The output of this OR circuit G1, an alarm signal ALMO, is then given to a microcomputer not shown in the figure. The microcomputer gives the overcurrent protection circuits the driving signals S in OFF mode, which are transmitted to the six transistors through photo-couplers by signal transmission lines which are insulated from the main circuits. The six transistors TR1 to TR6 are then turned off simultaneously, and are thus protected.

In the embodiment in Figure 1, power transistors are Used as switching devices, however, the switching devices are not limited to the power transistors but any power switching devices of the self-turn-off type may be applicable to the present invention.

In addition, the number of the temperature sensors H may be less than that of the power transistors. At least two sensors H may be provided, accomplishing their purpose of overcurrent protection if the power transistors TR1, TR3 and TR5 are disposed in close proximity to allow the temperature sensors to be disposed among them so that overheating of any one of the power transistors TR1, TR3 or TR5 will be detected by the sensor.

Furthermore, in Figure 1 the overcurrent protection circuits OC1 for the power transistors TR2, TR4 and TR6 in the lower arms of the bridge are provided for each power transistor element, but the purpose of the present invention may also be accomplished by, for example, coupling the emitters of the three power transistors TR2, TR4 and TR6 together to a terminal, inserting a shunt resistor between this terminal and the negative line (-) LN of main DC power supply, detecting increase of potential difference between both ends of this shunt resistor and transmitting this increase to only one overcurrent protection circuit which simultaneously turns off the three elements in the lower arms of the bridge to achieve the overcurrent protection.

Another embodiment that may also be applied to the present invention is that which detects any of the V_{CE}(sat) of the power transistors TR2, TR4 and TR6 exceeding a normal value by an overcurrent protection circuit which has three diodes D2 each coupled in parallel to the collectors of these three elements and effects overcurrent protection by turning them off simultaneously.

Moreover, two different OR circuits may also be applied without departing from the scope of the present invention, one of which OR circuits receives the alarm signals ALM1 from the overcurrent protection circuits OC for the power transistors in the lower three arms, and the other OR circuit receiving the alarm signal ALM2 from the overheating protection circuit OH.

The temperature sensors H are not always necessarily contained in the same package with TR1, TR3 and TR5, but may be disposed outside the package if these sensors are in positions that enable them effectively to detect overheating of TR1, TR3 and TR5.

Utilising the teachings of this invention, it becomes unnecessary to provide the photo-couplers for outputting alarm signals for the overcurrent protection circuit of the power transistors in the upper arms, and components capable of withstanding only low voltages may be used.

## Claims

1. A semiconductor device, comprising a protection circuit, wherein said semiconductor device comprises power switching device chips (TR1, TR2, TR3, TR4, TR5, TR6) each of which has a first and second main electrode and a control electrode for turning on and off a circuit between said first and second main electrodes, hereinafter referred to as a main circuit, in response to a control signal applied between said second main electrode and said control electrode, the first main electrode of one and the second main electrode of the other of respective pairs of said power switching device chips (TR1, TR2; TR3, TR4; TR5, TR6) being connected together at midpoints to form series circuits in which said main circuits of two chips are connected in series with the same polarity, a number of said series circuits being contained in one package and being connected in parallel with the same polarity, and
outputting an AC voltage supply from said midpoints between respective pairs of series-connected power switching device chips (TR1, TR2; TR3, TR4; TR5, TR6) by applying a DC voltage between those main terminals of said switching device chips of each series connected pair which are not connected to said midpoints, and switching the power switching device chips (TR1, TR2; TR3, TR4; TR5, TR6) on and off by applying driving signal pulses (S) to their control electrodes
said protection circuit further comprising:
means (OC), associated with each of the power switching device chips (TR1, TR3, TR5) whose second main electrodes are connected to the midpoints, to detect overcurrents flowing in the associated power switching device chips (TR1, TR3, TR5) and operative to render the respective power switching device chips (TR1, TR3, TR5) non-conductive until the start of the next driving signal pulse (S) applied to their respective control electrodes, the arrangement being such that successive periods of overcurrent flow cause the power switching device chip (TR1, TR3, TR5) to heat up, temperature sensors (H) being provided for detecting the temperature of each or a plurality of the power switching device chips whose second main electrodes are connected to said midpoints, the number of said temperature sensors (H) being equal to or less than the total number of such power switching device chips (TR1, TR3, TR5),
means (OH) for generating a first alarm signal (ALM2) when the temperature detected by any of said temperature sensors (H) exceeds a predetermined value, said means (OH) being coupled to a terminal point (LN), hereinafter referred to as a point of reference potential, for said second main electrodes of said power switching device chip (TR2, TR4, TR6) in each said series circuit, and the protection circuit comprising
means (OC1) for providing a second alarm signal (ALM1) by determining that the current of any of said main circuits in said power switching device chips (TR2, TR4, TR6) whose second electrodes are connected to said point of reference potential (LN), or a summed current of a plurality of said main circuits in these power switching device chips (TR2, TR4, TR6), exceeds a predetermined value, and
means (G1) which receives the first and second alarm signals (ALM2, ALM1) and emits a third alarm signal (ALM0) when one or more of said first and second alarm signals is detected.

2. A semiconductor device protection circuit, according to Claim 1, wherein three of said series circuits are contained in one package.

## Patentansprüche

1. Halbleiteranordnung mit Schutzschaltung, dadurch gekennzeichnet, daß diese Halbleiteranordnung Leistungsschalterelementechips (TR1, TR2, TR3, TR4, TR5, TR6) umfaßt. die jeweils eine erste und eine zweite Hauptelektrode und eine Steuerelektrode zum Ein- und Ausschalten einer Schaltung, die im folgenden als Hauptschaltung bezeichnet wird, zwischen der ersten und der zweiten Hauptelektrode entsprechend einem zwischen der zweiten Hauptelektrode und der Steuerelektrode zugeführten Steuersignal besitzen, wobei die erste Hauptelektrode des einen bzw. die zweite Hauptelektrode des anderen Paares der Leistungsschalterelementechips (TR1, TR2, TR3, TR4, TR5, TR6) an den Mittelpunkten miteinander verbunden sind, so daß Reihenschaltungen entstehen, bei denen die Hauptschaltungen zweier Chips mit derselben Polarität in Reihe geschaltet, mehrere dieser Reihenschaltungen in einem Gehäuse untergebracht und mit derselben Polarität parallelgeschaltet sind, und
eine Wechselspannung von diesen Mittelpunkten zwischen den entsprechenden Paaren der in Reihe geschalteten Leistungsschalterelementechips (TR1, TR2, TR3, TR4, TR5, TR6) durch Anlegen einer Gleichspannung zwischen den Hauptanschlüssen der Schalterelementechips jedes in Reihe geschalteten Paares. die nicht mit diesen Mittelpunkten verbunden sind, ausgegeben wird und die Leistungsschalterelementechips (TR1, TR2, TR3, TR4, TR5, TR6) durch Zuführung von Treibersignalimpulsen (S) an ihren Steuerelektroden in den Durchlaß- bzw. Sperrzustand gebracht werden,
die Schutzschaltung des weiteren umfaßt:
eine Schaltung (OC), die zu jedem der Leistungsschalterelementechips (TR1, TR3, TR5) gehört. deren zweite Hauptelektroden mit den Mittelpunkten verbunden sind, um die in den dazugehörigen Leistungsschalterelementechips (TR1, TR3, TR5) fließenden Überströme festzustellen und funktionell die entsprechenden Leistungsschalterelementechips (TR1, TR3, TR5) in einen nichtleitenden Zustand bis zum Beginn des nächsten. ihren entsprechenden Steuerelektroden zugeführten Treibersignalimpulses (S) zu bringen, wobei die Anordnung so gewählt ist, daß aufeinanderfolgende Penoden des Überstromflusses die Leistungsschalterelementechips (TR1, TR3, TR5) erhitzen läßt. Temperaturfühler (H) zum Feststellen der Temperatur jedes der oder mehrerer Leistungsschalterelementechips vorgesehen sind. deren zweite Hauptelektroden mit den Mittelpunkten verbunden sind, die Zahl der Temperaturfühler (H) gleich oder kleiner als die Gesamtzahl dieser Leistungsschalterelementechips (TR1, TR3, TR5) ist,
eine Schaltung (OH) zur Erzeugung eines ersten Alarmsignals (ALM2), wenn die von einem der Temperaturfühler (H) festgestellte Temperatur einen vorher festgelegten Wert überschreitet, wobei die Schaltung (OH) mit einer Anschlußstelle (LN), die im folgenden als Stelle mit Bezugspotential bezeichnet wird. für die zweiten Hauptelektroden der Leistungsschalterelementechips (TR2. TR4. TR6) in jeder Reihenschaltung verbunden ist. und die Schutzschaltung
eine Schaltung (OC1) zur Schaffung eines zweiten Alarmsignals (ALM1) umfaßt, durch die festgestellt wird. wann der Strom einer der Hauptschaltungen in den Leistungsschalterelementechips (TR2, TR4. TR6), deren zweite Elektroden mit der Stelle mit Bezugspotential (LN) verbunden sind. oder ein addierter Strom mehrerer Hauptschaltungen in diesen Leistungsschalterelementechips (TR2, TR4, TR6) einen vorher festgelegten Wert überschreitet. und
eine Schaltung (G1), die das erste und zweite Alarmsignal (ALM2, ALM1) empfängt und ein drittes Alarmsignal (ALMO) abgibt, wenn eines oder mehr als eines der ersten und zweiten Alarmsignale festgestellt wird.

2. Schutzschaltung einer Halbleiteranordnung nach Anspruch 1, dadurch gekennzeichnet, daß drei der Reihenschaltungen in einem Gehäuse untergebracht sind.

## Revendications

1. Dispositif à semi-conducteurs, comportant un circuit de protection, dans lequel ledit dispositif à semi-conducteurs comporte des puces (TR1, TR2, TR3, TR4, TR5, TR6) formant dispositifs de commutation de puissance, chacun desquels comporte une première et une seconde électrode principale et une électrode de commande pour commuter en mode passant et en mode bloqué un circuit situé entre lesdites première et seconde électrodes principales, appelé ci-après circuit principal, en réponse à un signal de commande appliqué entre ladite seconde électrode principale et ladite électrode de commande, la première électrode principale de l'une desdites puces des paires respectives constituées desdites puces (TR1, TR2 ; TR3, TR4 ; TR5, TR6) formant dispositifs de commutation de puissance et la seconde électrode principale de l'autre desdites puces de celles-ci étant connectées l'une avec l'autre au niveau de points-milieu pour former des circuits série dans lesquels lesdits circuits principaux constitués de deux puces sont connectés en série avec la même polarité, plusieurs desdits circuits série étant contenus dans un boîtier et étant connectés en parallèle avec la même polarité, et
délivrant en sortie une alimentation de tension alternative à partir desdits points-milieux situés entre puces respectives des paires de puces (TR1, TR2 ; TR3, TR4 ; TR5, TR6) formant dispositifs de commutation de puissance, connectées en série, en appliquant une tension continue entre les bornes principales desdites puces formant dispositifs de commutation de chacune des paires connectées en série qui ne sont pas connectées auxdits points-milieu, et en commutant les puces (TR1, TR2 ; TR3, TR4 ; TR5, TR6) formant dispositifs de commutation de puissance en mode passant et en mode bloqué en appliquant des impulsions de signal de commande à leurs électrodes de commande
ledit circuit de protection comportant en outre :
des moyens (OC), associés à chacune des puces (TR1, TR3, TR5) formant dispositifs de commutation de puissance, dont les secondes électrodes principales sont connectées aux points-milieu pour détecter des surintensités circulant dans les puces (TR1, TR3, TR5) formant dispositifs de commutation de puissance associés et agissant pour rendre non-conductrices les puces (TR1, TR3, TR5) formant dispositifs de commutation de puissance, respectives, jusqu'au début de l'impulsion de signal de commande suivante (S) appliquée à leurs électrodes de commande respectives, l'agencement étant tel que des périodes successives de surintensité amènent la puce (TR1, TR3, TR5) formant dispositif de commutation de puissance à s'échauffer, des capteurs de température (H) étant agencés pour détecter la température de chacune ou de plusieurs des puces formant dispositifs de commutation de puissance dont les secondes électrodes principales sont connectées auxdits points-milieu, le nombre desdits capteurs de température (H) étant égal ou inférieur au nombre total de telles puces (TR1, TR3, TR5) formant dispositifs de commutation de puissance,
des moyens (OH) pour produire un premier signal d'alarme (ALM2) lorsque la température détectée par l'un quelconque desdits capteurs de température (H) dépasse une valeur prédéterminée, lesdits moyens (OH) étant couplés à un point de connexion (LN), appelé ci-après point de potentiel de référence, destiné auxdites secondes électrodes principales de ladite puce (TR2, TR4, TR6) formant dispositif de commutation de puissance de chaque circuit série, et le circuit de protection comportant
des moyens (OC1) pour fournir un deuxième signal d'alarme (ALM1) en déterminant que le courant de l'un quelconque desdits circuits principaux desdites puces (TR2, TR4, TR6) formant dispositifs de commutation de puissance dont les secondes électrodes sont connectées audit point de potentiel de référence (LN), ou un courant cumulé de plusieurs desdits circuits principaux dans ces puces (TR2, TR4, TR6) formant dispositifs de commutation de puissance, dépasse une valeur prédéterminée, et
des moyens (G1) qui reçoivent les premier et deuxième signaux d'alarme (ALM2, ALM1) et émettent un troisième signal d'alarme (ALM0) lorsqu'un ou plusieurs desdits premier et deuxième signaux d'alarme est détecté.

2. Circuit de protection de dispositif à semi-conducteur selon la revendication 1, dans lequel trois desdits circuits série sont contenus dans un boîtier.
